# EUROPEAN PATENT APPLICATION

(11) **EP 1 455 184 A1**
(43) Date of publication of application: **08.09.2004**
(21) Application number: 03251389.7
(22) Date of filing: 07.03.2003
(51) Int. Cl.: G01N 29/02

(54) **Ultrasonic analyser**

(71) Applicant: Ultrasonic Scientific Limited, Dublin 8 (IE)
(72) Inventor: Buckin, Vitaly, c/o Ultrasonic Scientific Limited, Dublin 8 (IE)
(74) Representative: Haley, Stephen

(57) **Abstract**

An ultrasonic analyser comprising an inlet for receiving, in use, a sample to be analysed, and a pump for drawing the sample, in use, into the analyser. A temperature conditioner conditions the temperature of the input sample and an analysing cell receives the temperature conditioned sample, and passes an analysing ultrasound signal therethrough. Analysing means receives signals from the analysing cell and providing a data output based thereon.

## Description

The present invention relates to an ultrasonic analyser.

Ultrasonic analysis of materials, in which an ultrasonic signal is passed through a material and the output monitored to determine characteristics of the material, is well known. Employment of such analysis has benefits in a wide range of fields, from product quality control, to analysis of the results of chemical reactions. The general principles are well known, and will not be discussed in detail here. However, in general terms, a sample is provided to a container, the container then has ultrasonic signals passed through it and the signals are then detected and analysed to provide an indication of a particular parameter associated with the material to be analysed.

Known techniques have, however, certain problems associated with them. Firstly, ultrasonic analysis in such a manner is generally a labourious and time consuming task. Samples of the material to be analysed have to be taken, inserted into the container, ultrasound passed through them, the outputs analysed and then processed. Furthermore, between samples it is normally necessary to clean the measuring container to prevent cross-contamination, and all of this results in the process being ineffective or of limited use in situations where high speed analysis of a large quantity of samples, particularly in real time, is required. Indeed, in view of these problems, in such situations it is generally been found that other analysis techniques, rather than ultrasound analysis, have had to be employed.

Furthermore, even in situations where attempts to provide high-throughput ultrasound analysis devices have been made, problems have incurred in terms of enabling the provisions of accurate and reliable measurement that is consistent over time and which is readily adaptable for rapid measurement of samples of differing characteristics and which may cross-contaminate one another.

The present invention seeks to provide a device which overcomes some of these problems.

According to the present invention there is provided an ultrasonic analyser comprising:
an inlet for receiving, in use, a sample to be analysed;
a pump for drawing the sample, in use, into the analyser;
a temperature conditioner for conditioning the temperature of the input sample;
an analysing cell for receiving the temperature conditioned sample, and for passing an analysing ultrasound signal therethrough; and
analysing means for receiving signals from the analysing cell and providing a data output based thereon.

The analyser may have multiple inputs, each input having a respective pump, temperature conditioner and analysing cell, to increase the throughput of the device and also provide comparative measurements.

The inlet may be of variable input area so that its input area can be selected dependent upon the sample material being input, for example, being increased when a more viscous sample or an increased rate of throughput needs to be analysed.

The temperature conditioner may be an appropriate refrigeration or heating arrangement, or may be a simple water jacket surrounding a through-flowing pipe network.

The pump may be positioned either between the inlet and the temperature conditioner in terms of the sample flow, or after the temperature conditioner and before the analysing cell. The pump may be a peristaltic pump. The pump may be arranged such that it can be selectively connected to a source of cleansing fluid for driving, during a cleaning cycle, cleansing fluid through the analyser.

The pump may be controlled by a timer which can be suitably configured, and possibly controlled by the analysing means, to control the amount of sample drawn in through the inlet in any particular time frame, or, indeed, dependent upon previous analysis results.

With the analyser of the present invention the applicants have provided an arrangement which ensures accurate and reliable measurements can be provided for a wide range of sample type and in a high speed and high throughput manner. Furthermore, it allows for very high resolution ultrasonic measurements (with a value of relative velocity change in the region of 10⁻⁶ to 10⁻⁷).

One example of the present invention will now be described with reference to the accompanying drawings, in which:
Figure 1 is a schematic side cross-sectional view of an analyser according to the present invention; and
Figure 2 is a side cross-sectional view of the cell of figure 1.

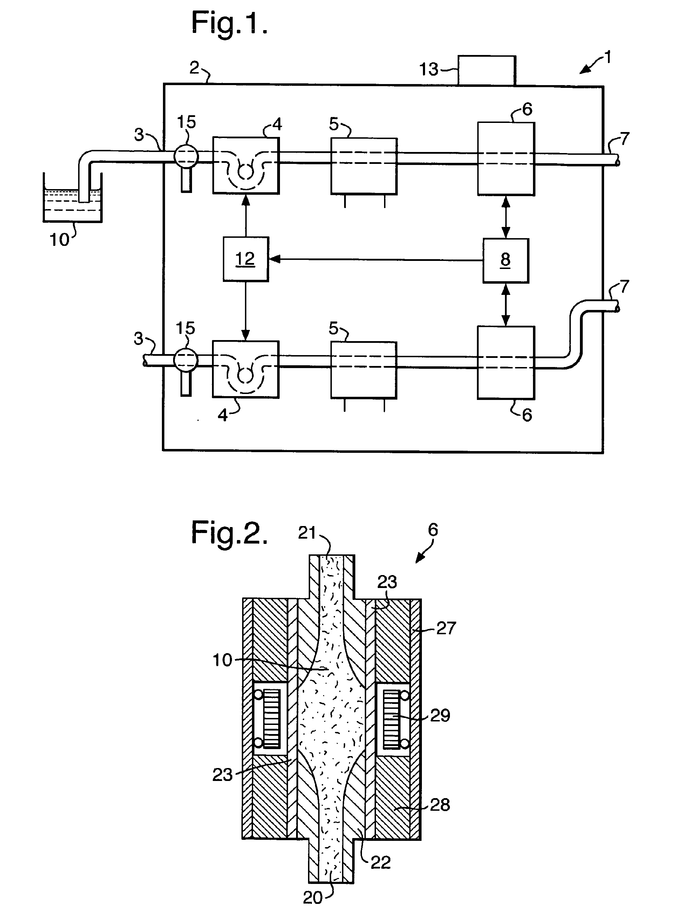

Referring to figure 1, an analyser 1 according to the present invention has a housing 2 with an inlet 3. Inlet 3 may be a readily replaceable conduit and may, either through means of changing the conduit, or other means, be of variable input area, dependent upon the sample to the input. The inlet 3 is connected via appropriate internal pipework and a valve 15 to a pump 4, which is preferably a peristaltic pump or other easily controllable and readily cleanable pump. Such a pump 4 is useful in that its flow rate can be varied, improving control of the sample measuring process. The pump 4 is, in turn, connected via the further pipe work to a temperature conditioner 5, and the output of the temperature conditioner 5 is then passed to an analysing cell 6. The analysing cell 6 is then connected via a further pipework to an outlet 7.

The analysing cell 6 is connected, in use, to analysing means 8, which may be an appropriately configured PC and associated connecting circuitry.

The pump 4 is connected to a controller 12 which, in turn, can be connected either to the analysing means 8 and/or control switches 13 on the housing 2.

The analysing cell may be of a known type, or may be of the type shown in our earlier patent application number PCT/EP02/13974. The cell 6 should, however, be capable of receiving and passing through samples without retaining potentially contaminating components of the sample within it, and in many operations should be preferably be capable of having a continuous flow of sample passed through it in use. Such a cell is shown in figure 2, and has an inlet 20, outlet 21 defined by frame 22 and walls 23. Transducers 29 are surrounded by casing 27,28.

The temperature conditioner 5 may be a simple water jacket, which has temperature controlled water passing therethrough, or may be a more complex refrigeration and heating unit, depending upon the type of samples that are to be analysed. The significance, however, of this component is that it should ensure a consistent temperature for the sample that is then passed on, in use, to the analysing cell 6, to ensure reliable and consistent results are provided by the analyser 1.

The analyser 1 may be configured to operate in one of a number of ways.

For example, it may be configured to operate in any "manual" mode, in which the input switches 13 are operated when a sample 10 is placed at the inlet 3, the sample then being drawn into the analyser 1, passed through the pump 4 and temperature conditioner 5, onto the analysing cell 6 and then output to a waste via the outlet 7. In this case, the pump 4 may be timed to ensure a consistent and accurate amount of sample 10 is drawn into the analyser 1, or may be placed into a continuous mode, in which the sample 10 is drawn into the analyser 1 until no more sample 10 is available. In either case, as the sample 10 is passed through the analysing cell 6, ultrasonic signals are passed there through and the output of the transducer measuring the signals in the cell 6 is provided to the analysing means 7 for appropriate analysis and output to a user.

In an alternative mode the analyser 1 may operate in an "automatic" fashion obtaining samples 10 from the flow of a process at regular timed intervals, or at intervals which are dependent upon previous data provided by the analysing means 8.

In either mode there may also be provided (not shown) a source of cleansing fluid that can be drawn through the system by operation of valve 15 after each set of analysing steps, or at regular time intervals, to ensure the cleanliness of the system and consistency and accuracy of results.

As can be seen from figure 1, an array of separate cells 6, with associated temperature conditioners 5 and pumps 4 may be provided for higher throughput and/or comparative measurements. This can be useful in ensuring that a reference sample measurement can be provided to remove, to a further degree, temperature variance effects.

As mentioned above, the present invention provides a simple and effective means for providing high quality and reliable ultrasonic analysis of materials both in real time and on a continuous basis, as required.

## Claims

1. An ultrasonic analyser comprising:
an inlet for receiving, in use, a sample to be analysed;
a pump for drawing the sample, in use, into the analyser;
a temperature conditioner for conditioning the temperature of the input sample;
an analysing cell for receiving the temperature conditioned sample, and for passing an analysing ultrasound signal therethrough; and
analysing means for receiving signals from the analysing cell and providing a data output based thereon.

2. The analyser of claim 1, wherein the temperature conditioner is a water jacket surrounding a through-flowing pipe network.

3. The analyser of claim 1, wherein the temperature conditioner is an electronically controlled unit.

4. The analyser of claim 1, 2 or 3, wherein the pump is a peristaltic pump.

5. The analyser of any preceding claim, wherein the pump is arranged such that it can be selectively connected to a source of cleansing fluid for driving, during a cleaning cycle, cleansing fluid through the analyser.

6. The analyser of any preceding claim, wherein the inlet is of variable input area so that its input area can be selected dependent upon the sample material being input.

7. The analyser of any preceding claim, wherein the pump is controlled by a timer, to control the amount of sample drawn in through the inlet in any particular time frame.
